# EUROPEAN PATENT APPLICATION

(11) **EP 1 884 445 A2**
(43) Date of publication of application: **06.02.2008**
(21) Application number: 07075605.1
(22) Date of filing: 16.07.2007
(51) Int. Cl.: B62D 1/19

(54) **Adjustable energy absorbing device for a collapsible steering column**

(30) Priority: 31.07.2006 US 496380
(71) Applicant: Delphi Technologies, Inc., Troy, Michigan 48007 (US)
(72) Inventor: Manwaring, Marvin V., Clio, MI 48420 (US); Tinnin, Melvin Lee, Clio, MI 48420 (US); Riefe, Richard Kremer, Saginaw, MI 48609 (US); MacDonald, Brad M., Bay CIty, MI 48706 (US); Ravindra, Ravi, Saginaw, MI 48603 (US)
(74) Representative: Denton, Michael John

(57) **Abstract**

A collapsible steering column assembly (20) having an outer jacket (22) and an inner jacket (26) movable relative to the outer jacket (22) is disclosed. The assembly (20) includes an energy absorbing device (34) having a support (60) disposed on the outer jacket (22) for supporting a first anvil (36) and a second anvil (42) in relative proximity to each other. An energy absorbing member (70) is secured to the inner jacket (26) and disposed adjacent the first and second anvils (36, 42) for transferring energy from the inner jacket (26) to the first and second anvils (36, 42) during movement of the inner jacket (26) relative to the outer jacket (22). The second anvil (42) defines a longitudinal axis (44) and includes a first locking member selectively engaging the support (60) with the second anvil (42) movable along the longitudinal axis (44) and rotatable about the longitudinal axis (44) between a plurality of positions for engaging and disengaging the first locking member with the support (60) to facilitate the varied resistance of the second anvil (42).

## Description

### TECHNICAL FIELD

The present invention relates to a collapsible steering column assembly for a vehicle.

### BACKGROUND OF THE INVENTION

Various assemblies relating to collapsible steering columns are known in the art. Such an assembly is disclosed in United States Patent No. 6,769,715 (the '715 patent) to Riefe, et al. The '715 patent discloses a collapsible steering column assembly for a vehicle having an upper steering column movable when the steering column collapses. A support is secured to the upper steering column and has an energy absorbing device disposed on the support. The energy absorbing device includes a first anvil disposed within the support and secured to a stationary body of the vehicle. A plurality of second anvils are disposed on the support adjacent the first anvil. An energy absorbing member is disposed adjacent the first anvil and the second anvils for transferring energy to the first anvil and the second anvil during the collapsing of the steering column. One end of the energy absorbing member is secured to the support and the other end is free to move when the steering column collapses. However, the energy absorbing member lacks the ability to be secured within the steering column. An actuator is disposed on the support and coupled to the second anvils for adjusting the amount of resistance by the second anvils to the movement of the upper steering column relative to the stationary body during a collision. However, the energy absorbing device lacks the ability to make quick pre-assembly adjustments to the amount of resistance by the second anvil. In addition, the energy absorbing device lacks the ability to have a single second anvil for adjusting the amount of resistance.

Therefore, there remains a need to develop a collapsible steering column assembly having an energy absorbing device that provides for quick pre-assembly adjustments of a second anvil to provide varied resistance to the movement of an inner jacket relative to an outer jacket.

### SUMMARY OF THE INVENTION

The present invention provides for a steering column assembly having an outer jacket and an inner jacket with the inner jacket movable relative to the outer jacket for collapsing a steering column. The steering column assembly includes an energy absorbing device having a first anvil and a second anvil disposed on the outer jacket adjacent one another. The second anvil is adjustable to provide varied resistance to the movement of the inner jacket relative to the outer jacket. A support is disposed on the outer jacket for supporting the first anvil and the second anvil in relative proximity to each other. An energy absorbing member is secured to the inner jacket and movable with the inner jacket. The energy absorbing member is disposed adjacent the first anvil and the second anvil for transferring energy from the inner jacket to the first anvil and the second anvil during the movement of the inner jacket relative to the outer jacket. The second anvil defines a longitudinal axis and includes a first locking member selectively engaging the support with the second anvil movable along the longitudinal axis and rotatable about the longitudinal axis between a plurality of positions for engaging and disengaging the first locking member with the support to facilitate the varied resistance of the second anvil.

The present invention therefore provides for an energy absorbing device having a first locking member engaging a support for providing quick pre-assembly adjustments of a second anvil to vary the resistance of the second anvil which reduces manufacturing time and costs. In addition, an energy absorbing member is secured within an inner jacket which protects part of the energy absorbing member from damage. Additionally, a support is disposed on an outer jacket for protecting a first anvil, the second anvil and the energy absorbing member from damage. Further, the energy absorbing device is small in size to provide space savings around the steering column assembly due to a single second anvil being utilized to vary the resistance.

### BRIEF DESCRIPTION OF THE DRAWINGS

Other advantages of the present invention will be readily appreciated, as the same becomes better understood by reference to the following detailed description when considered in connection with the accompanying drawings wherein:

Figure 1 is a perspective view of a collapsible steering column assembly having an energy absorbing device of a first embodiment;

Figure 2 is a fragmented cross-sectional view of the collapsible steering column assembly before collapsing a steering column;

Figure 3 is an exploded perspective view of the energy absorbing device of the first embodiment;

Figure 4 is a fragmented back side perspective view of the energy absorbing device;

Figure 5 is a fragmented bottom perspective view of the energy absorbing device having a flexible flange of the first embodiment;

Figure 6 is a fragmented front side view of the energy absorbing device of the first embodiment;

Figure 7 is a fragmented cross-sectional view of the collapsible steering column assembly after collapsing the steering column;

Figure 8 is a fragmented front side view of the energy absorbing device having an actuator of an alternative embodiment;

Figure 9 is an exploded perspective view of an energy absorbing device of a second embodiment;

Figure 10 is a fragmented bottom perspective view of the energy absorbing device having a flexible flange of the second embodiment; and

Figure 11 is a fragmented side view of the energy absorbing device of the second embodiment.

### DESCRIPTION OF THE PREFERRED EMBODIMENTS

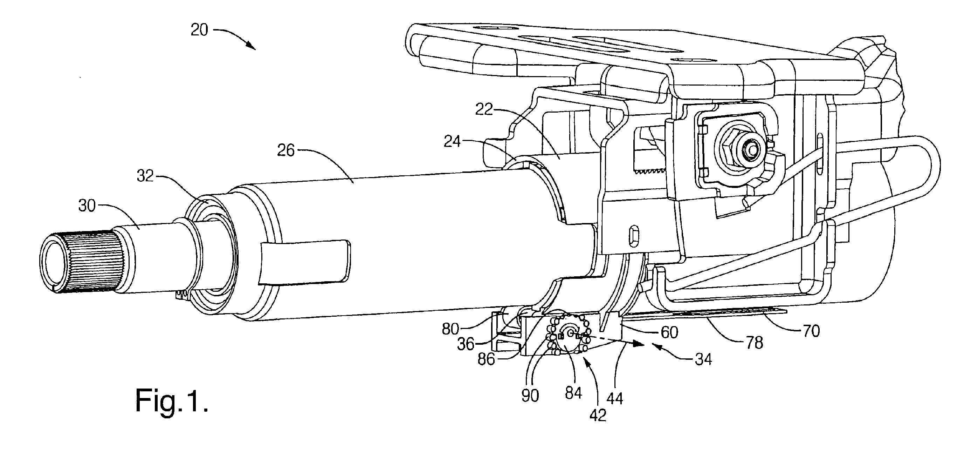

Referring to the Figures, wherein like numerals indicate like or corresponding parts throughout the several views, a collapsible steering column assembly **20** for a vehicle (not shown) is generally shown in Figures 1-7.

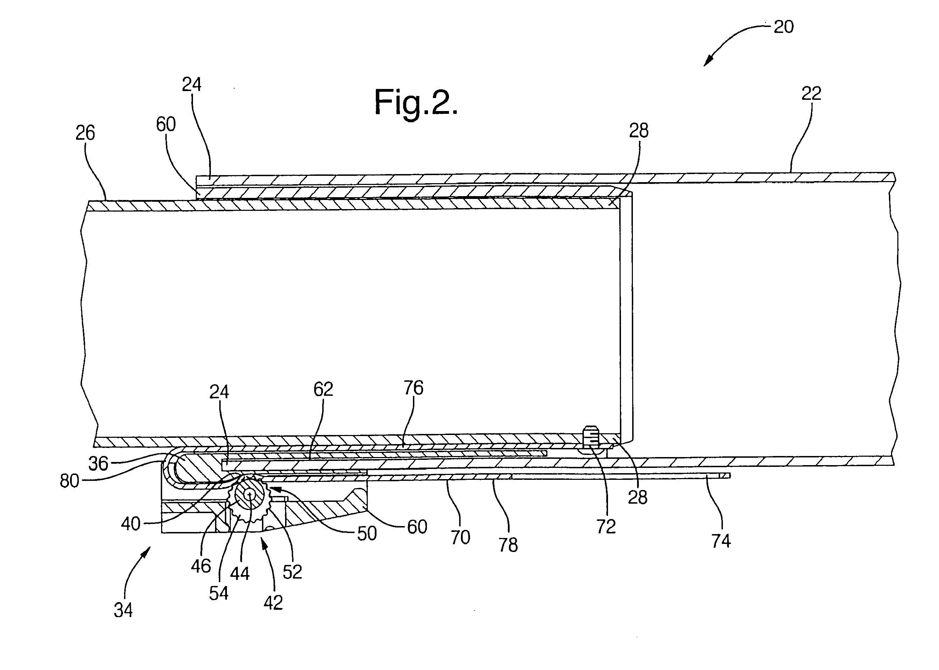

Referring to Figures 1 and 2, the collapsible steering column assembly **20** includes an outer jacket **22** having a distal end **24** and an inner jacket **26** having an end surface **28** with the inner jacket **26** movable relative to the outer jacket **22** for collapsing a steering column. More specifically, the end surface **28** of the inner jacket **26** is disposed within the distal end **24** of the outer jacket **22**. An upper shaft **30** extends through the inner jacket **26** and includes a bearing **32** attached to the upper shaft **30** and the inner jacket **26** so when the vehicle is in a collision, the upper shaft **30** and the inner jacket **26** move together within the outer jacket **22**. Figure 2 illustrates the collapsible steering column assembly **20** before the vehicle is in the collision. A steering wheel (not shown) is attached to the upper shaft **30** and when the vehicle is in the collision, a driver applies a force to the steering wheel which causes the upper shaft **30** and the inner jacket **26** to move together within the outer jacket **22**.

The collapsible steering column assembly **20** further includes an energy absorbing device, generally shown at **34**, having a first anvil **36** disposed on the outer jacket **22** and defining a curved profile. The first anvil **36** includes a shoulder **40** spaced from the curved profile. The energy absorbing device **34** further includes a second anvil, generally shown at **42**, defining a longitudinal axis **44** and disposed on the outer jacket **22** adjacent the first anvil **36**. The energy absorbing device **34** is small in size to provide space savings around the steering column due to the single second anvil **42** being utilized to vary the resistance. The second anvil **42** is adjustable to provide varied resistance to the movement of the inner jacket **26** relative to the outer jacket **22**.

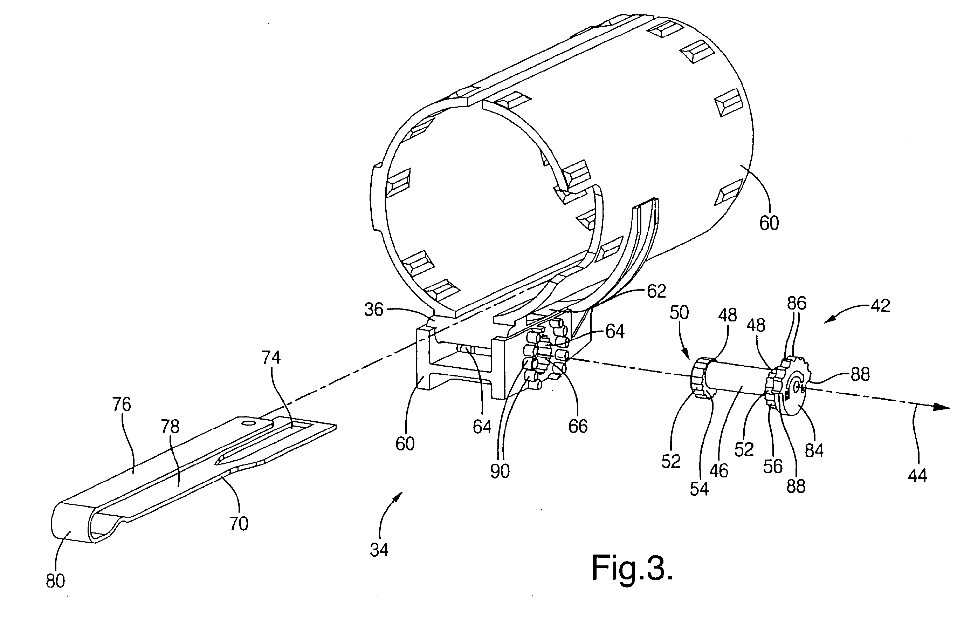

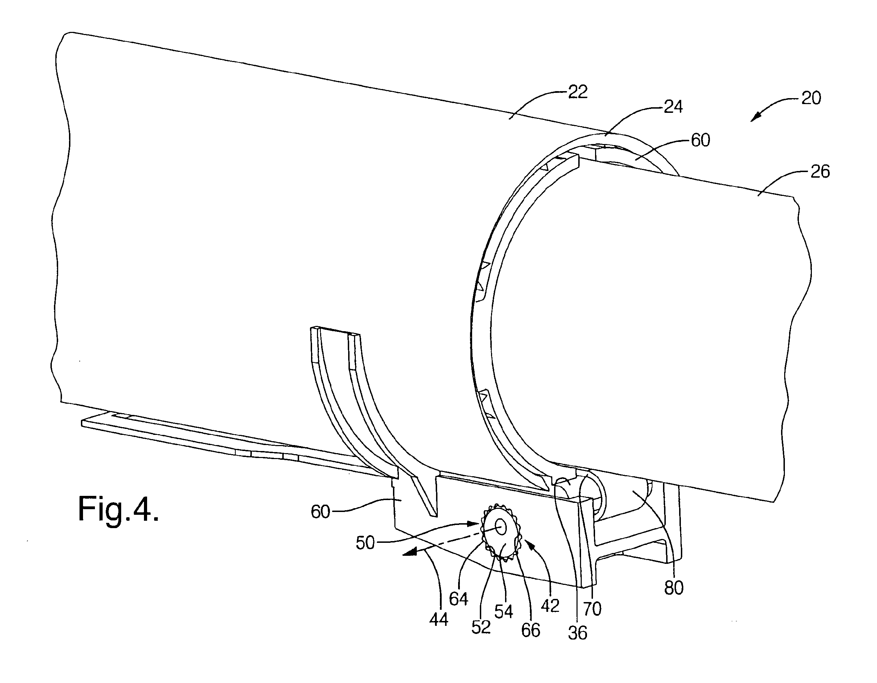

Also referring to Figures 3 and 4, the second anvil **42** includes a body portion **46** having opposing ends **48** with the longitudinal axis **44** extending along the body portion **46**. A plate, generally shown at **50**, having a plurality of ribs **52** and defining a circumference, is disposed on one of the ends **48** of the second anvil **42**. The plate **50** may be further defined as a first end plate **54** disposed on one of the ends **48** of the second anvil **42** and a second end plate **56** disposed on the other end **48** of the second anvil **42** with the ribs **52** extending from each of the first end plate **54** and the second end plate **56**. The body portion **46** is disposed offset from the circumference to define an eccentric profile, as best shown in Figure 2, for providing varied resistance of the second anvil **42**. It is contemplated that the body portion **46** may be centered on the circumference with the body portion **46** having a non-circular outer surface. However, it is to be appreciated that any suitable profile may be disposed on the second anvil to provide varied resistance. When the second anvil **42** is rotated about the longitudinal axis **44**, the eccentric profile rotates to provide small to large changes in the resistance of the second anvil **42**.

A support **60** is adapted to be mounted to the steering column. More specifically, the support **60** is disposed on the outer jacket **22** for supporting the first anvil **36** and the second anvil **42** in relative proximity to each other. The second anvil **42** is movably mounted to the support **60** and adjustable to provide varied resistance to the movement of the inner jacket **26** relative to the outer jacket **22**. The support **60** aids in protecting the first anvil **36** and the second anvil **42** from damage. Preferably, the first anvil **36** and the support **60** are formed of a homogenous material. Even more preferably, the first anvil **36** and the support **60** are formed of a one-piece integrated plastic material or a one-piece integrated polymeric material. However it is to be appreciated that the first anvil **36** and the support **60** may be formed of nylon or any other acceptable material known to those of ordinary skill in the art.

The support **60** defines a slot **62** for receiving the distal end **24** of the outer jacket **22** to aid in positioning the support **60** relative to the outer jacket **22**. The support **60** further defines a plurality of apertures **64** spaced apart from each other along the longitudinal axis **44**. The support **60** includes a plurality of protrusions **66** extending toward the longitudinal axis **44** within the apertures **64** of the support **60** for mating with the ribs **52** of the plate **50** to prevent rotation of the second anvil **42** about the longitudinal axis **44**. More specifically, the first end plate **54** and the second end plate **56** are disposed in corresponding apertures **64** of the support **60** with the ribs **52** of each of the first end plate **54** and the second end plate **56** mating with the protrusions **66** of each of the apertures **64** to prevent rotation of the second anvil **42** about the longitudinal axis **44**. Preferably, the protrusions **66** and the support **60** are formed of a homogenous material. Even more preferably, the protrusions **66** and the support **60** are formed of a one-piece integrated plastic material or a one-piece integrated polymeric material. However it is to be appreciated that the protrusions **66** and the support **60** may be formed of nylon or any other acceptable material known to those of ordinary skill in the art.

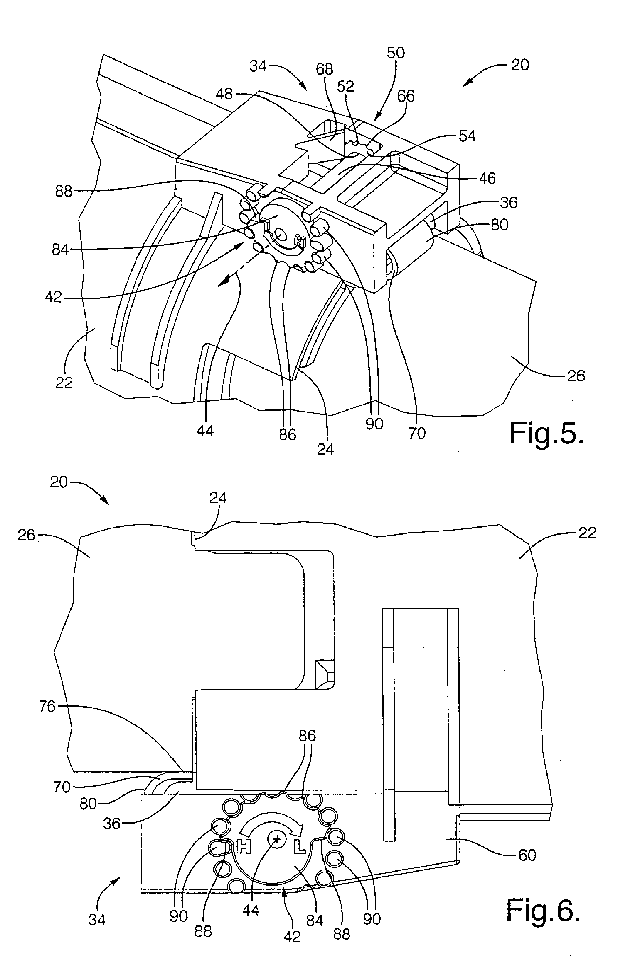

Referring to Figure 5, the support **60** includes a flexible flange **68** abutting the second anvil **42** to selectively prevent movement of the second anvil **42** along the longitudinal axis **44**. Even more preferably, the flexible flange **68** abuts the plate **50** of the second anvil **42** to prevent movement of the second anvil **42** along the longitudinal axis **44**. Most preferably, the flexible flange **68** abuts the first end plate **54** of the second anvil **42** to prevent movement of the second anvil **42** along the longitudinal axis **44**. The flexible flange **68** may be pressed to move the flexible flange **68** away from the plate **50** for allowing movement of the second anvil **42** along the longitudinal axis **44**.

As best shown in Figures 2 and 3, an energy absorbing member **70** is secured to the inner jacket **26** and movable with the inner jacket **26**. More specifically, a fastener **72** secures the energy absorbing member **70** to the end surface **28** of the inner jacket **26**. The energy absorbing member **70** defines an elongated hole **74** for inserting the fastener **72** through the hole **74** to easily secure the fastener **72** to the energy absorbing member **70** and the inner jacket **26**. The energy absorbing member **70** is disposed adjacent the first anvil **36** and the second anvil **42** for transferring energy to the first anvil **36** and the second anvil **42** during the collapsing of the steering column. More specifically, the energy absorbing member **70** is disposed adjacent the first anvil **36** and the second anvil **42** for transferring energy from the inner jacket **26** to the first anvil **36** and the second anvil **42** during the movement of the inner jacket **26** relative to the outer jacket **22**. Preferably, the energy absorbing member **70** is disposed over the first anvil **36** and disposed between the shoulder **40** and the body portion **46** of the second anvil **42**.

The energy absorbing member **70** further includes a first portion **76** and a second portion **78** spaced from each other to define a u-shaped portion **80** disposed about the curved profile of the first anvil **36**. The first portion **76** is disposed on one side of the first anvil **36** and the second portion **78** is disposed on an opposing side of the first anvil **36**. Preferably, the first portion **76** of the energy absorbing member **70** is secured to the end surface **28** of the inner jacket **26** by the fastener **72**. The second anvil **42** is spaced from the first anvil **36** and engages the second portion **78** of the energy absorbing member **70** for allowing the energy absorbing member **70** to initially absorb energy transferred by the inner jacket **26** to the first anvil **36** and continue to absorb energy by both the first anvil **36** and the second anvil **42** as the inner jacket **26** continues to move within the outer jacket **22**. The energy absorbing member **70** may be formed of ductile material. Preferably, the energy absorbing member **70** is formed of a metallic material. Even more preferably, the energy absorbing member **70** is formed of steel. However, it is to be appreciated that the energy absorbing member **70** may be formed of any other acceptable material known to those of ordinary skill in the art.

Referring to Figures 1 and 3-6, the second anvil **42** includes a first locking member selectively engaging the support **60** with the second anvil **42** movable along the longitudinal axis **44** and rotatable about the longitudinal axis **44** between a plurality of positions for engaging and disengaging the first locking member with the support **60** to facilitate the varied resistance of the second anvil **42**. The first locking member selectively engages the support **60** for providing quick pre-assembly adjustments of the second anvil **42** to provide varied resistance of the second anvil **42**. It is contemplated that the second anvil **42** may be locked into the pre-assembly position by an adhesive, a fastener, welding, or any other acceptable way known to those of ordinary skill in the art to prevent tampering of the second anvil **42**.

The first locking member is disposed on at least one of the ends **48** of the body portion **46**. The first locking member may be further defined as a face plate **84** having a plurality of teeth **86**. Also, the first locking member may be defined as the plate **50** with the ribs **52** as set forth above. The face plate **84** abuts the support **60** to prevent movement of the second anvil **42** in one direction along the longitudinal axis **44** and allow movement of the second anvil **42** in an opposite direction along the longitudinal axis **44**. The face plate **84** further provides for an easy way to grip the second anvil **42** to move the second anvil **42** along the longitudinal axis **44** and rotate the second anvil **42** about the longitudinal axis **44** to engage and disengage the first locking member with the support **60**. It is contemplated that the face plate **84** may be disposed on one of the ends **48** of the body portion **46** or disposed on the second end plate **56** (as shown in Figure 3). The face plate **84** may include a pair of ledges **88** spaced apart from each other for providing a pair of stop positions to signify a minimum resistance of the second anvil **42** and a maximum resistance of the second anvil **42**. The face plate **84** and the plate 50 move in unison along the longitudinal axis **44** and about the longitudinal axis **44** for simultaneous engaging and disengaging the teeth **86** of the face plate **84** and the ribs **52** of the plate **50** with the support **60**. When the teeth **86** of the face plate **84** and the ribs **52** of the plate **50** are disengaged from the support **60**, the second anvil **42** is rotated about the longitudinal axis **44** to rotate the eccentric profile to provide small to large changes in the resistance of the second anvil **42**. Once the desired position of the second anvil **42** is achieved, the second anvil **42** moves along the longitudinal axis **44** to re-engage the teeth **86** of the face plate **84** and the ribs **52** of the plate **50** with the support **60**.

A second locking member is disposed on the support **60** adjacent the first locking member for cooperating with the first locking member to prevent rotation of the second anvil **42** about the longitudinal axis **44**. The second locking member may be further defined as at least one tab **90** extending from the support **60** for cooperating with the teeth **86** of the face plate **84** to prevent rotation of the second anvil **42** about the longitudinal axis **44**. Also, the second locking member may be defined as the protrusions **66** extending toward the longitudinal axis **44** within the apertures **64** of the support **60** for mating with the ribs **52** of the plate **50** to prevent rotation of the second anvil **42** about the longitudinal axis **44** as set forth above. Preferably, the tab **90** and the support **60** are formed of a homogenous material. Even more preferably, there are a plurality of tabs **90** with the tab **90** and the support **60** formed of a one-piece integrated plastic material or a one-piece integrated polymeric material. However it is to be appreciated that the tab **90** and the support **60** may be formed of nylon or any other acceptable material known to those of ordinary skill in the art. It is to be appreciated that one of the tabs **90** may be configured in any shape for abutting one of the ledges 88 of the face plate **84** when the second anvil **42** is rotated to one of the stop positions.

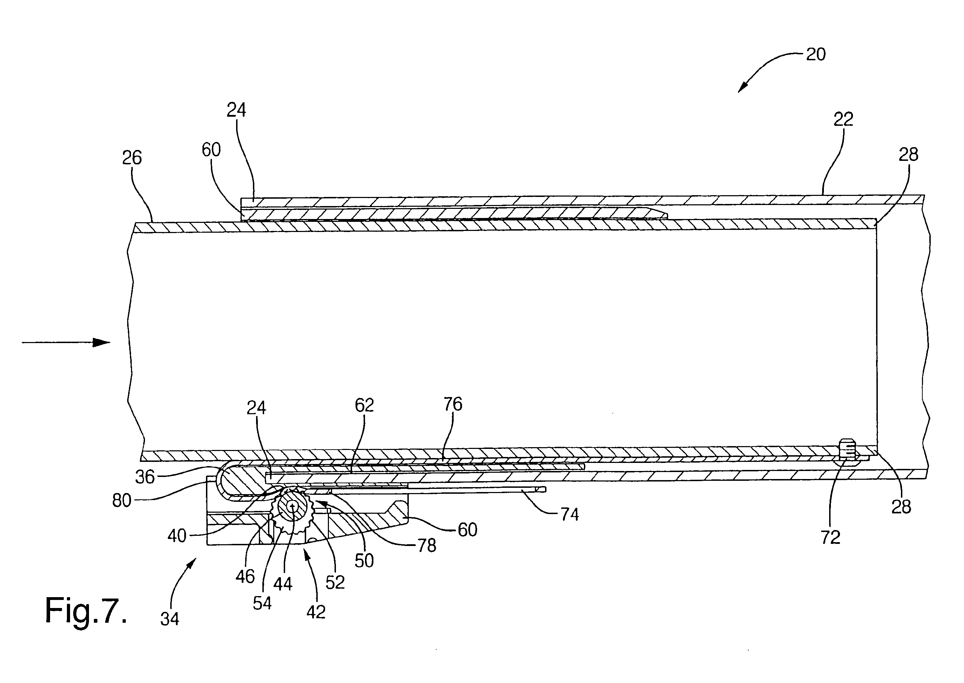

As shown in Figure 7 when the vehicle is in the collision, the force applied to the steering wheel from the driver causes the upper shaft **30** and the inner jacket **26** to move relative to the outer jacket **22**. The energy absorbing member **70** initially absorbs energy transferred by the inner jacket **26** to the first anvil **36** and continues to absorb energy by both the first anvil **36** and the second anvil **42** as the inner jacket **26** continues to move within the outer jacket **22**. In other words, the first portion **76** of the energy absorbing member **70** moves over the first anvil **36** for absorbing energy transferred from the inner jacket **26** during the movement of the inner jacket **26** relative to the outer jacket **22**. As the first portion **76** continues to absorb energy, the second portion **78** of the energy absorbing member **70** moves over the second anvil **42**, the shoulder **40** of the first anvil **36** and the curved profile of the first anvil **36** for absorbing energy transferred from the inner jacket **26** during the movement of the inner jacket **26** relative to the outer jacket **22**.

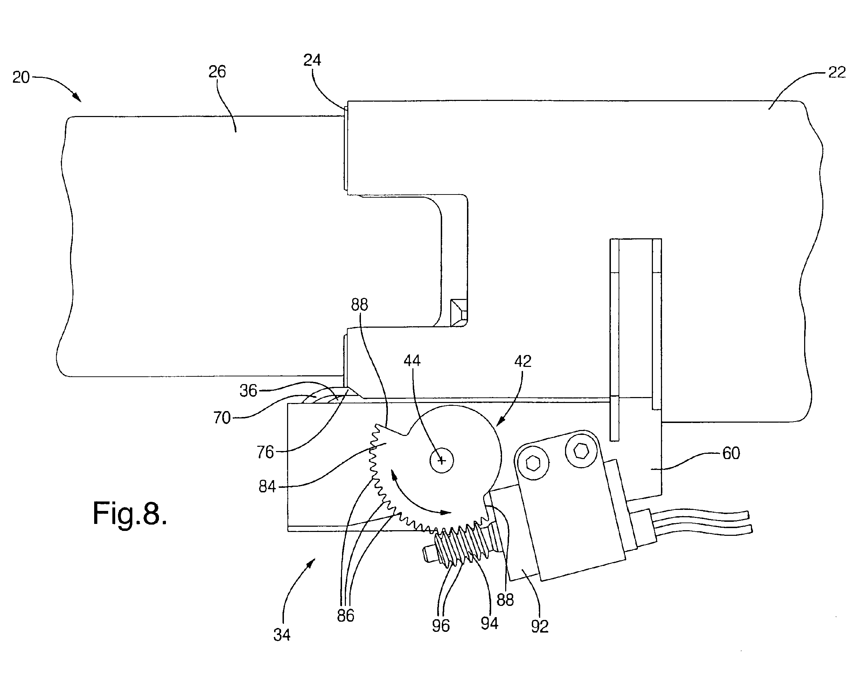

Alternatively, as shown in Figure 8, an actuator **92** may be disposed on the support **60** for rotating the second anvil **42** between a plurality of positions to provide varied resistance to the movement of the inner jacket **26** relative to the outer jacket **22** when the vehicle is in the collision. The second locking member of this embodiment may be coupled to the actuator **92** and cooperate with the teeth **86** of the face plate **84**. In this embodiment the teeth **86** of the face plate **84** are smaller and closer together and the tabs **90** of the support **60** are eliminated. Preferably, the second locking member is further defined as a gear **94** having a plurality of serrations **96** for cooperating with the teeth **86** of the face plate **84**. The gear **94** may be defined as a worm gear having the serrations **96** or any other acceptable gear known to those of ordinary skill in the art for cooperating the serrations **96** with the teeth **8**6 of the face plate **84**.

A sensor (not shown) may be in electrical communication with the actuator **92** for activating the actuator **92** to rotate the second anvil **42** which adjusts the amount of resistance by the second anvil **42** when the vehicle is in the collision. The sensor may take into account variables such as a weight of the driver, a position of the driver relative to the steering wheel, whether the driver has a seat belt fastened, a speed of the vehicle, or any other variable that may affect how much energy the energy absorbing member **70** should absorb. The actuator **92** may be an electric motor, a solenoid, an explosive charge, or any other acceptable actuator **92** known to those of ordinary skill in the art. It is to be appreciated when utilizing the actuator **92**, the ribs **52** of the plate **50** are eliminated and/or the protrusions **66** of the support **60** are eliminated to allow rotational movement of the second anvil **42** about the longitudinal axis **44** when the vehicle is in the collision.

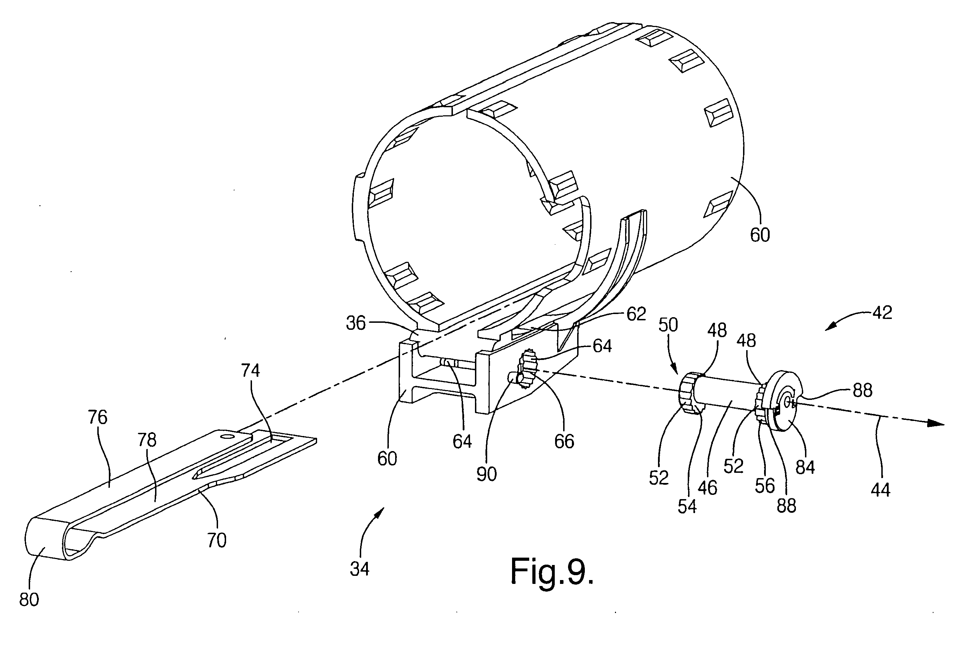

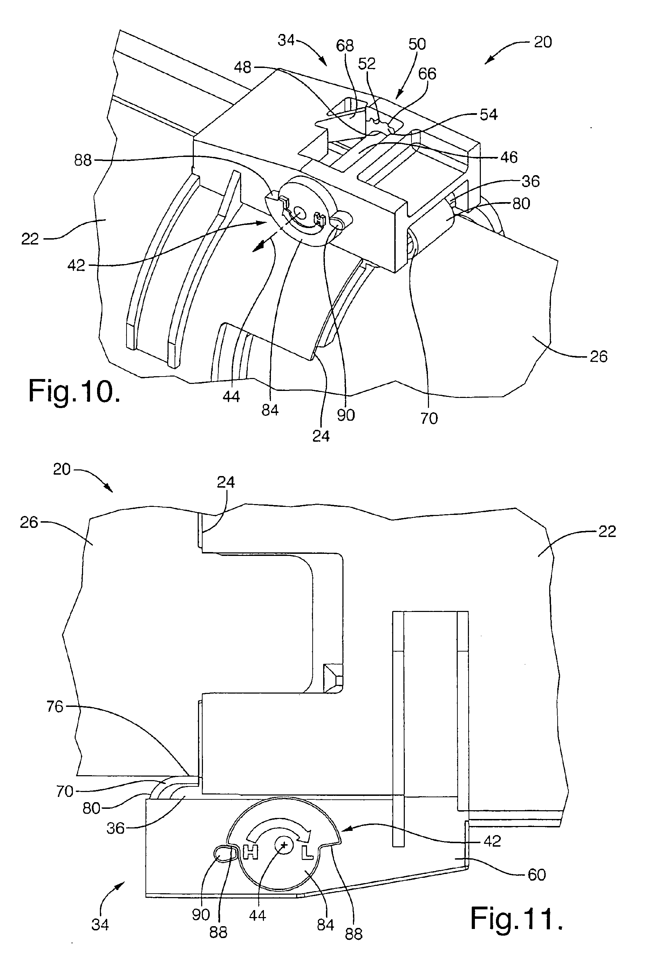

Referring to Figures 9-11, a second embodiment of the collapsible steering column assembly **20** for a vehicle, wherein like numerals indicate like or corresponding parts throughout the several views, is generally shown. The primary distinction between the first embodiment and the second embodiment are the configurations of the first locking member and the second locking member.

In this embodiment, the teeth **86** of the face plate **84** are eliminated and the face plate includes the ledges **88** spaced apart from each other for providing the stop positions to signify the minimum resistance of the second anvil **42** and the maximum resistance of the second anvil **42**. The plurality of tabs **90** are eliminated and a single tab **90** is disposed on the support **60** for abutting one of the stop positions when the second anvil **42** is rotated to the minimum resistance of the second anvil **42** or the maximum resistance of the second anvil **42**. It is to be appreciated that the tab **90** may be configured in any shape for abutting the ledges **88**. The first locking member of this embodiment is defined as the plate **50** with the ribs **52** and disposed on the second anvil **42** as set forth above. The second locking member of this embodiment is further defined as the protrusions **66** extending toward the longitudinal axis **44** within the apertures **64** of the support **60** with the protrusions **66** and the ribs **52** mating with each other to prevent rotation of the second anvil **42** about the longitudinal axis **44** as set forth above.

Obviously, many modifications and variations of the present invention are possible in light of the above teachings. The foregoing invention has been described in accordance with the relevant legal standards; thus, the description is exemplary rather than limiting in nature. Variations and modifications to the disclosed embodiment may become apparent to those skilled in the art and do come within the scope of the invention. Accordingly, the scope of legal protection afforded this invention can only be determined by studying the following claims.

## Claims

1. A collapsible steering column assembly (20) for a vehicle, said assembly comprising;
an outer jacket (22),
an inner jacket (26) movable relative to said outer jacket (22) for collapsing a steering column,
a first anvil (36) disposed on said outer jacket (22),
a second anvil (42) disposed on said outer jacket (22) adjacent said first anvil (36) with said second anvil (42) being adjustable to provide varied resistance to the movement of said inner jacket (26) relative to said outer jacket (22), and
an energy absorbing member (70) secured to said inner jacket (26) and movable with said inner jacket (26) with said energy absorbing member (70) disposed adjacent said first anvil (36) and said second anvil (42) for transferring energy from said inner jacket (26) to said first anvil (36) and said second anvil (42) during said movement of said inner jacket (26) relative to said outer jacket (22).

2. An assembly as set forth in claim 1 further including a support (60) disposed on said outer jacket (22) for supporting said first anvil (36) and said second anvil (42) in relative proximity to each other.

3. An assembly as set forth in claim 2 wherein said first anvil (36) defines a curved profile and said energy absorbing member (70) includes a first portion (76) and a second portion (78) spaced from each other to define a u-shaped portion (80) disposed about said curved profile with said first portion (76) disposed on one side of said first anvil (36) and said second portion (78) disposed on an opposing side of said first anvil (36).

4. An assembly as set forth in claim 3 wherein said second anvil (42) is spaced from said first anvil (36) and engages said second portion (78) of said energy absorbing member (70).

5. An assembly as set forth in claim 2 wherein said first anvil (36) and said support (60) are formed of a homogenous material.

6. An assembly as set forth in claim 2 wherein said second anvil (42) defines a longitudinal axis (44) and includes a first locking member selectively engaging said support (60) with said second anvil (42) movable along said longitudinal axis (44) and rotatable about said longitudinal axis (44) between a plurality of positions for engaging and disengaging said first locking member with said support (60) to facilitate the varied resistance of said second anvil (42).

7. An assembly as set forth in claim 6 further including a second locking member disposed on said support (60) and adjacent said first locking member for cooperating with said first locking member to prevent rotation of said second anvil (42) about said longitudinal axis (44).

8. An assembly as set forth in claim 2 further including an actuator (92) disposed on said support (60) for rotating said second anvil (42) between a plurality of positions to provide varied resistance to the movement of said inner jacket (26) relative to said outer jacket (22).

9. An energy absorbing device (34) for a collapsible steering column of a vehicle, said device comprising;
a support (60) adapted to be mounted to the steering column,
a first anvil (36),
a second anvil (42) movably mounted to said support (60) and disposed adjacent said first anvil (36) with said second anvil (42) defining a longitudinal axis (44) and being adjustable to provide varied resistance,
an energy absorbing member (70) disposed adjacent said first anvil (36) and said second anvil (42) for transferring energy to said first anvil (36) and said second anvil (42) during a collapsing of a steering column, and
said second anvil (42) having a first locking member selectively engaging said support (60) with said second anvil (42) movable along said longitudinal axis (44) and rotatable about said longitudinal axis (44) between a plurality of positions for engaging and disengaging said first locking member with said support (60) to facilitate the varied resistance of said second anvil (42).

10. A device as set forth in claim 9 further including a second locking member disposed adjacent said first locking member for cooperating with said first locking member to prevent rotation of said second anvil (42) about said longitudinal axis (44).

11. A device as set forth in claim 10 wherein said second locking member is disposed on said support (60) adjacent said first locking member.

12. A device as set forth in claim 9 wherein said second anvil (42) includes a body portion (46) having opposing ends (48) with said longitudinal axis (44) extending along said body portion (46) and said first locking member disposed on at least one of said ends (48) of said body portion (46).

13. A device as set forth in claim 12 further including a plate (50) disposed on one of said ends (48) of said second anvil (42) and defining a circumference with said body portion (46) offset from said circumference to define an eccentric profile for providing varied resistance of said second anvil (42).

14. A device as set forth in claim 11 wherein said first locking member is further defined as a face plate (84) having a plurality of teeth (86) and said second locking member is further defined as at least one tab (90) extending from said support (60) for cooperating with said teeth (86) of said face plate (84) to prevent rotation of said second anvil (42) about said longitudinal axis (44).

15. A device as set forth in claim 14 further including a plate (50) having a plurality of ribs (52) and disposed on said second anvil (42).

16. A device as set forth in claim 15 wherein said support (60) defines a plurality of apertures (64) spaced apart from each other along said longitudinal axis (44) and having a plurality of protrusions (66) extending toward said longitudinal axis (44) within said apertures (64) of said support (60) for mating with said ribs (52) of said plate (50) to prevent rotation of said second anvil (42) about said longitudinal axis (44).

17. A device as set forth in claim 11 wherein said first locking member is further defined as a plate (50) having a plurality of ribs (52) and disposed on said second anvil (42).

18. A device as set forth in claim 17 wherein said support (60) defines a plurality of apertures (64) spaced apart from each other along said longitudinal axis (44) and said second locking member is further defined as a plurality of protrusions (66) extending toward said longitudinal axis (44) within said apertures (64) of said support (60) for mating with said ribs (52) of said plate (50) to prevent rotation of said second anvil (42) about said longitudinal axis (44).

19. A device as set forth in claim 18 wherein said plate (50) is further defined as a first end plate (54) and a second end plate (56) spaced from each other and disposed on said second anvil (42) with said first end plate (54) and said second end plate (56) disposed in corresponding apertures (64) of said support (60).

20. A device as set forth in claim 9 wherein said support (60) includes a flexible flange (68) abutting said second anvil (42) to selectively prevent movement of said second anvil (42) along said longitudinal axis (44).
